# EUROPÄISCHE PATENTSCHRIFT

(11) **EP 2 930 137 B1**
(45) Veröffentlichungstag und Bekanntmachung des Hinweises auf die Patenterteilung: **01.12.2021**
(21) Anmeldenummer: 15160547.4
(22) Anmeldetag: 24.03.2015
(51) Int. Cl.: B66F 9/20, B66F 9/075, B62B 3/06, B62B 5/00, B62B 5/06

(54) **FLURFÖRDERZEUG**
INDUSTRIAL TRUCK
CHARIOT DE MANUTENTION

(30) Priorität: 04.04.2014 DE 102014104841
(43) Veröffentlichungstag der Anmeldung: 14.10.2015
(73) Patentinhaber: Jungheinrich Aktiengesellschaft, 22047 Hamburg (DE)
(72) Erfinder: Mittag, Stefan, 04178 Leipzig (DE); Kral, Marko, 06114 Halle/Saale (DE)
(74) Vertreter: Hauck Patentanwaltspartnerschaft mbB

(56) Entgegenhaltungen:
- EP-A1- 2 407 414
- DE-A1-102004 034 742
- DE-A1-102004 059 699
- US-A- 5 638 387
- None

## Beschreibung

Die Erfindung bezieht sich auf ein Flurförderzeug nach Anspruch 1.

Die Erfindung bezieht sich auf ein Flurförderzeug, das von einem Fahrmotor antreibbar und dessen Lastteil von einer Hubeinrichtung betätigbar ist. Die Handhabung des Flurförderzeugs erfolgt über eine Deichsel, die zum einen um eine horizontale Achse schwenkbar gelagert ist und zum anderen eine Schwenkung des mindestens eines Antriebsrades um eine Hochachse ermöglicht. Am Ende der Deichsel ist ein Deichselkopf angeordnet, der Griffe zum Betätigen der Deichsel aufweist sowie Bedienelemente enthält zur Betätigung der Steuerelektronik im Deichselkopf. Diese ist über Leitungen im Deichselstiel mit der Leistungselektronik verbunden, über die der elektrische Fahrmotor mit Energie versorgt wird. Am Deichselkopf befindet sich auch mindestens ein Fahrschalter, bei dessen Betätigung zum einen die Fahrtrichtung und zum anderen die Fahrgeschwindigkeit vorgegeben wird. Die Deichsel lässt sich zwischen einer Hoch- und einer nahezu horizontalen Stellung verschwenken. In den Schwenkendstellungen ist eine Bremse eingeschaltet. Außerdem ist in diesen Endpositionen eine Betätigung des Fahrmotors nicht möglich.

Ein solches Flurförderzeug, welches die Merkmale des Oberbegriffs des Anspruchs 1 umfasst, ist z.B. aus DE 10 2004 034 742 A1 bekannt.

Um ein derartiges Flurförderzeug in Betrieb zu setzen, wird entweder ein Schlüssel in ein entsprechendes Schloss gesteckt, die Eingabe eines Codes in das Codeschloss oder durch die Freigabe mit Codekarte am Fahrzeug abgelesen. Sobald das Flurförderzeug eingeschaltet ist, beginnt die Leistungselektronik mit ihrer Hochlaufroutine und prüft alle notwendigen Bedingungen, die für den störungsfreien Betrieb des Flurförderzeugs erfüllt sein müssen. Sobald der Hochlauf fehlerfrei durchlaufen ist, ist das Flurförderzeug betriebsbereit.

Bei herkömmlichen Flurförderzeugen ist für den Bediener die Fahrtfreigabe nur dadurch zu erkennen, dass sich das Flurförderzeug bei Betätigung des Fahrtrichtungswahlhebels in Bewegung setzt.

Der Erfindung liegt die Aufgabe zugrunde, ein Flurförderzeug zu schaffen, welches dem Bediener eine Information über die Fahrtfreigabe vermittelt.

Diese Aufgabe wird durch die Merkmale des Patentanspruchs 1 gelöst.

Bei dem erfindungsgemäßen Flurförderzeug ist vorgesehen, dass mindestens ein Fahrschalter aus durchscheinendem Material am Deichselkopf angebracht ist, eine Leuchte, insbesondere eine LED, am Deichselkopf wird vom Fahrschalter überdeckt und leuchtet auf, wenn nach dem Aktivieren die Leistungselektronik fehlerfrei hochgefahren ist.

Erfindungsgemäß wird die Fahrtfreigabe bereits angezeigt, wenn die Leistungselektronik fehlerfrei hochgefahren ist. Die Besonderheit besteht darin, dass der Fahrschalter aus durchscheinendem Material besteht, etwa aus einem geeigneten Kunststoff mit bestimmter Färbung. Zumeist sind beidseitig eines Horns, das vom Stiel der Deichsel fortweisend, am Deichselkopf angeordnet ist, Fahrschalter angebracht, bei deren Betätigung sowohl die Fahrtrichtung als auch die Geschwindigkeit eingestellt wird. Ein derartiger Schalter verdeckt normalerweise die optische Anzeige bzw. die Leuchte. Eine indirekte Anzeige erfolgt dadurch, dass die Leuchte den Fahrschalter beleuchtet und dieser aufgrund seiner durchscheinenden Beschaffenheit zu leuchten beginnt.

Nach einer Ausgestaltung der Erfindung weist ein derartiger Fahrschalter auf der dem Horn zugewandten Seite eine ringförmige Höhlung auf, in die die Leuchte, insbesondere eine LED, hineinsteht. Durch eine geeignete Anordnung der Leuchte innerhalb dieser Höhlung kann ein optisches Signal für den Bediener erzeugt werden, das in jeder Umgebung noch deutlich sichtbar ist.

Ein Ausführungsbeispiel der Erfindung wird nachfolgend anhand von Zeichnungen näher erläutert.
- Fig. 1: zeigt perspektivisch ein Flurförderzeug mit Deichselbetätigung,

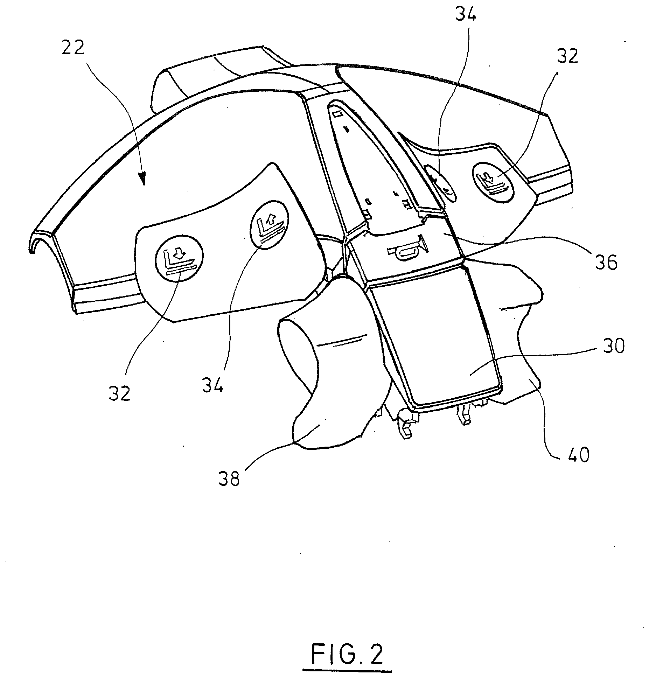

- Fig. 2: zeigt einen Teil des Deichselkopfes der Deichsel nach Fig. 1 in perspektivischer Darstellung mit zwei Fahrschaltern,
- Fig. 3: zeigt perspektivisch den Deichselkopf nach Fig. 2 mit entferntem Fahrschalter.

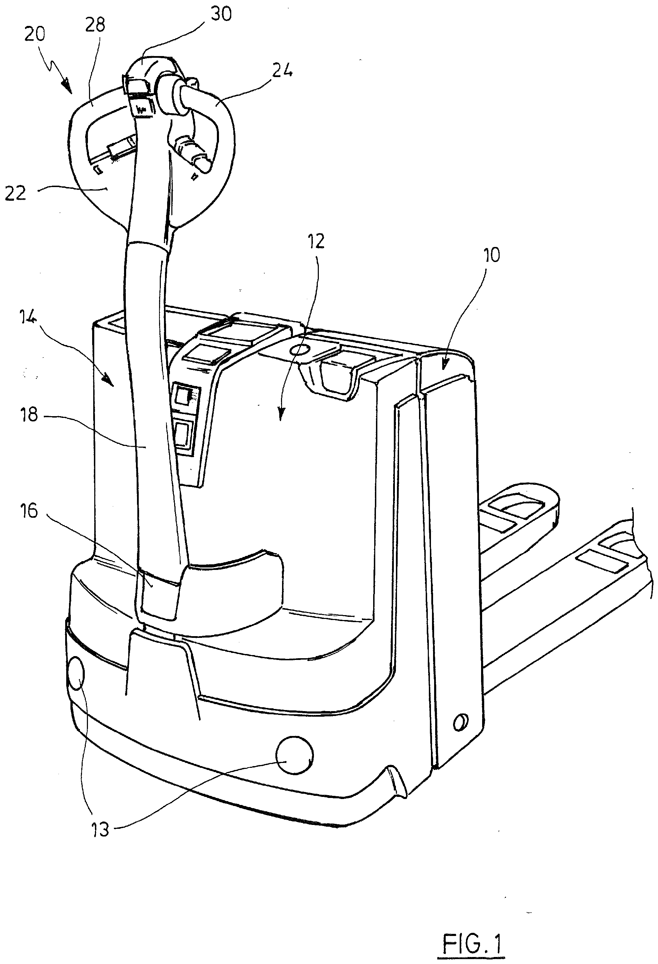

Das Flurförderzeug nach Fig. 1 weist ein Lastteil 10 und ein Antriebsteil 12 auf. Im Antriebsteil 12 ist ein Fahrmotor untergebracht, der etwa ein einzelnes gelenktes Antriebsrad antreibt (nicht gezeigt). Der Fahrmotor sitzt auf einem Schemel, der um eine Hochachse schwenkbar gelagert ist, in dem auch das Antriebsrad gelagert ist. Der Schemel wird von einer Deichsel 14 verschwenkt, wobei die Anlenkung der Deichsel 14 um eine horizontale Achse bei 16 vorgesehen ist. Die Deichsel 16 besteht aus einem Deichselstiel 18 und einem Deichselkopf 20.

Im Antriebsteil sitzt außerdem ein Hubaggregat (nicht gezeigt) für das Lastteil 10. Leistungselektronik und auch Hubaggregate werden von einer nicht gezeigten Batterie versorgt. Im Antriebsteil 12 sind außerdem zwei Tagfahrleuchten 13 angeordnet.

Der Deichselkopf 20 weist ein sich quer erstreckendes Gehäuse 22 auf, an das sich nach hinten bzw. oben zwei Griffe 24 bzw. 28 anschließen. In Fortsetzung des Deichselstiels 18 an dem entgegengesetzten Ende des Gehäuses 22 ist ein Horn 30 angeordnet. Die beschriebenen konstruktiven Merkmale sind herkömmlich.

In dem Gehäuse 22 ist die Steuerelektronik für das Flurförderzeug untergebracht. Sie ist hier nicht gezeigt. Mit der Steuerelektronik verbunden, sind auf beiden Seiten des Gehäuses 22 Betätigungselemente angeordnet. Ein Betätigungselement 32 dient zum Absenken und ein anderes 34 zum Anheben des Lastteils 10. Mittig im Bereich des Horns 30 ist ein Betätigungselement 36 für eine Hupe vorgesehen. Auf beiden Seiten des Horns 30 sind Fahrschalter 38 bzw. 40 angeordnet. Sie sind um eine Achse quer zur Erstreckung des Horns 30 drehbar gelagert. Die Drehrichtung gibt die Fahrtrichtung des Flurförderzeugs vor und der Drehwinkel seine Geschwindigkeit. Auch die Fahrschalter 38, 40 sind mit der Steuerelektronik verbunden, die über Leitungen im Deichselstiel 18 mit der Leistungselektronik im Antriebsteil 12 verbunden ist.

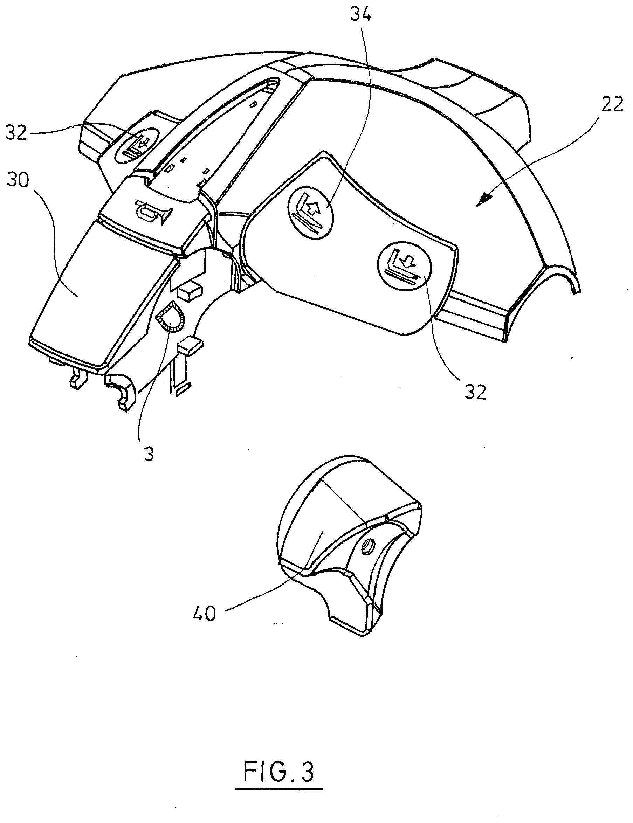

Wie in Figur 3 erkennbar, ist eine LED seitlich am Horn 30 angebracht, und zwar nahe der Drehachse für den Fahrschalter 40. Der Fahrschalter 40 ist auf der dem Horn 30 zugewandten Seite mit einer ringförmigen Ausnehmung oder Höhlung versehen, in die hinein die LED steht. Der Fahrschalter 40 besteht aus einem halbtransparenten bzw. durchscheinenden Kunststoffmaterial. Leuchtet die LED auf, wird dadurch der Fahrschalter 40 zum Leuchten gebracht und der Bediener kann dieses optische Signal ohne weiteres erkennen. Es zeigt ihm an, dass nach dem Hochfahren der Leistungselektronik, sobald sie fehlerfrei erfolgte, eine Fahrbereitschaft herbeigeführt wurde, die als optisches Signal zur Kenntnis gebracht wird.

Wie eingangs erläutert, wird das Flurförderzeug mit Hilfe eines Schlüssels, der Eingabe eines Codes und/oder einer Codekarte eingeschaltet. Daraufhin beginnt eine Hochlaufroutine die die Bereitschaft des Fahrmotors bzw. der Hubeinrichtung zur Folge hat. Sobald das Hochfahren fehlerfrei abgeschlossen ist, wird dies durch die LED 3 angezeigt.

In Figur 3 ist lediglich eine LED auf einer Seite des Horns 30 gezeigt. Es ist denkbar, auf beiden Seiten des Horns eine LED anzubringen und die zugehörigen Fahrschalter aus halbtransparentem bzw. durchscheinendem Material herzustellen. Bei einseitiger Anbringung eines Fahrschalters richtet sich die gewählte Seite danach, ob der Bediener Links- oder Rechtshänder ist.

Die Bedingung für das Aufleuchten der LED, durch welches die Fahrbereitschaft angezeigt ist, kann ergänzt werden, dadurch, dass die LED erst aufleuchtet, wenn die Deichsel 14 eine zwischen den Endstellungen befindliche Arbeitsposition eingenommen hat. Wenn ein Mitfahrflurförderzeug vorliegt, kann eine Bedingung dadurch erzeugt werden, dass ein Bediener die Plattform betritt. Zu diesem Zweck ist der Plattform ein Sensor oder ein Schalter zugeordnet, der feststellt, ob ein Bediener auf der Plattform steht. Ein derartiger Sensor oder Schalter ist bei derartigen Flurförderzeugen an sich bekannt.

Statt einer LED oder einer ähnlichen optischen Leuchte, wie sie in Figur 3 dargestellt ist, können in einem nicht beanspruchten Flurförderzeug auch die Tagfahrleuchten 13 dazu verwendet werden, die Fahrbereitschaft zu signalisieren. Die Bedingungen, die für das Anzeigen der Fahrbereitschaft erfüllt sein müssen, sind die gleichen wie oben beschrieben.

## Patentansprüche

1. Flurförderzeug mit einem Fahrmotor, einer Hubeinrichtung für ein Lastteil (10) des Flurförderzeugs, einer Leistungselektronik für den Fahrmotor, einer über eine horizontale Achse schwenkbaren Deichsel (14) mit einem Deichselkopf (20), in dem eine Steuerelektronik für die Leistungselektronik und die Hubeinrichtung untergebracht ist, mit der Steuerelektronik verbundenen Bedienelementen im Deichselkopf (20) für die Ansteuerung des Fahrmotors und der Hubeinrichtung, die unter anderem mindestens einen Fahrschalter (38, 40) für den Fahrmotor aufweisen, wobei die Deichsel (14) in den Schwenkendstellungen eine Bremse betätigt und den Fahrmotor stillsetzt und in Arbeitsstellungen dazwischen die Bremse gelöst und eine Betätigung des Fahrmotors zugelassen ist, **dadurch gekennzeichnet, dass** mindestens ein Fahrschalter (38, 40) aus durchscheinendem Material am Deichselkopf (20) angebracht ist, eine Leuchte, insbesondere eine LED (3) am Deichselkopf (20) vom Fahrschalter (38 bzw. 40) überdeckt ist und die Leuchte aufleuchtet, wenn nach dem Aktivieren die Leistungselektronik fehlerfrei hochgefahren ist.

2. Flurförderzeug nach Anspruch 1, **dadurch gekennzeichnet, dass** die Leuchte erst dann aufleuchtet, wenn auch die Deichsel (14) in einer Arbeitsposition ist und/oder eine Bedienperson eine Plattform betritt.

3. Flurförderzeug nach Anspruch 1 oder 2, **dadurch gekennzeichnet, dass** der Deichselkopf vom Deichselstiel (18) fortweisend ein Horn (30) aufweist, zu beiden Seiten des Horns (30) ein Fahrschalter (38, 40) drehbar gelagert ist und die Leuchte (3) seitlich am Horn (30) angebracht ist.

4. Flurförderzeug nach Anspruch 3, **dadurch gekennzeichnet, dass** der Fahrschalter (38, 40) auf der dem Horn (30) zugewandten Seite eine ringförmige Höhlung aufweist, in die die Leuchte (3) hineinsteht.

## Claims

1. An industrial truck comprising a travel motor, a lifting apparatus for a load part (10) of the industrial truck, power electronics for the travel motor, a tiller (14) that can be pivoted about a horizontal axis and that comprises a tiller head (20) in which control electronics are accommodated for the power electronics and the lifting apparatus, operating elements in the tiller head (20) that are connected to the control electronics for controlling the travel motor and the lifting apparatus, which operating elements include, inter alia, a travel switch (38, 40) for the travel motor, wherein the tiller (14) actuates a brake and stops the travel motor in the pivot end positions and, in operating positions therebetween, releases the brake and actuation of the travel motor is permitted, **characterized in that** at least one travel switch (38, 40) made of translucent material is provided on the tiller head (20), a lamp, in particular an LED, (3) is covered by the travel switch (38 or 40) on the tiller head (20) and the lamp lights up when the power electronics have started up error-free after being activated.

2. The industrial truck according to claim 1, **characterized in that** the lamp only lights up when the tiller (14) is also in an operating position and/or an operator steps onto a platform.

3. The industrial truck according to claim 1 or 2, **characterized in that** the tiller head comprises a horn (30) that projects out of the tiller shaft (18), a travel switch (38, 40) is rotatably mounted on both sides of the horn (30) and the lamp (3) is provided laterally to the horn (30).

4. The industrial truck according to claim 3, **characterized in that** the travel switch (38, 40) comprises an annular cavity on the side facing the horn (30) into which the lamp (3) projects.

## Revendications

1. Chariot de manutention avec un moteur de traction, un dispositif de levage pour un élément de chargement (10) du chariot de manutention, une électronique de puissance pour le moteur de traction, un timon (14) apte à pivoter autour d'un axe horizontal avec une tête de timon (20) dans laquelle est installée une électronique de commande pour l'électronique de puissance et le dispositif de levage, des éléments d'actionnement reliés à l'électronique de commande dans la tête de timon (20) pour l'actionnement du moteur de traction et du dispositif de levage, lesquels présentent entre autres au moins un commutateur de vitesse (38, 40) pour le moteur de traction, dans lequel, dans les positions finales de pivotement, le timon (14) active un frein et arrête le moteur de traction et dans des positions de travail intermédiaires, le frein est desserré et une activation du moteur de traction est permise, **caractérisé en ce qu'**au moins un commutateur de vitesse (38, 40) constitué d'un matériau translucide est fixé sur la tête de timon (20), une lampe, en particulier une DEL (3) est recouverte par le commutateur de vitesse (38 ou 40) sur la tête de timon (20) et la lampe s'allume lorsque l'électronique de puissance a démarré correctement après activation.

2. Chariot de manutention selon la revendication 1, **caractérisé en ce que** la lampe ne s'allume que lorsque le timon (14) est également dans la position de travail et/ou lorsqu'un opérateur arrive sur une plateforme.

3. Chariot de manutention selon la revendication 1 ou 2, **caractérisé en ce que** la tête de timon présente un cornet (30) opposé à la tige de timon (18), un commutateur de vitesse (38, 40) est monté de façon rotative des deux côtés du cornet (30) et la lampe (3) est fixée latéralement sur le cornet (30).

4. Chariot de manutention selon la revendication 3, **caractérisé en ce que** le commutateur de vitesse (38, 40) présente une cavité annulaire sur le côté tourné vers le cornet (30), dans laquelle la lampe (3) fait saillie.
